# EUROPÄISCHE PATENTSCHRIFT

(11) **EP 1 776 821 B1**
(45) Veröffentlichungstag und Bekanntmachung des Hinweises auf die Patenterteilung: **03.10.2012**
(21) Anmeldenummer: 05743150.4
(22) Anmeldetag: 11.05.2005
(51) Int. Cl.: H04L 29/06, H04M 7/00

(54) **SYSTEM UND VERFAHREN ZUM SICHEREN ANMELDEN IN EINEM KOMMUNIKTIONSSYSTEM MIT NETZWERKVERBINDUNGS- UND VERBINDUNGSSTEUERUNGS-RECHNERN**
SYSTEM AND METHOD FOR A SECURE LOG-ON TO A COMMUNICATIONS SYSTEM COMPRISING NETWORK CONNECTION AND CONNECTION HANDLING COMPUTERS
SYSTEME ET PROCEDE DE DEMANDE DE COMMUNICATION FIABLE DANS UN SYSTEME DE COMMUNICATION COMPRENANT DES ORDINATEURS DE COMMUNICATION RESEAU ET DES ORDINATEURS DE COMMANDE DE COMMUNICATION

(30) Priorität: 13.08.2004 DE 102004039407
(43) Veröffentlichungstag der Anmeldung: 25.04.2007
(73) Patentinhaber: Siemens Enterprise Communications GmbH & Co. KG, 81379 München (DE)
(72) Erfinder: BUSSER, Jens-Uwe, 81739 München (DE); FRIES, Steffen, 85598 Baldham (DE)
(74) Vertreter: Fritzsche, Thomas
(86) Internationale Anmeldenummer: PCT/EP2005/052143
(87) Internationale Veröffentlichungsnummer: WO 2006/018329

(56) Entgegenhaltungen:
- WO-A-01/05115
- WO-A-01/19018
- WO-A-03/039096
- US-A- 5 586 260

## Beschreibung

Die Erfindung betrifft ein Kommunikationssystem gemäß dem Oberbegriff des Anspruchs 1, ein Verfahren zum Anmelden in einem Kommunikationssystem gemäß dem Oberbegriff des Anspruchs 11 und ein Netzwerkverbindungs-Rechner gemäß dem Oberbegriff des Anspruchs 18.

In dem ITU-Standard H.235 (veröffentlicht in ITU-T Recommandation H. 235, Version 3 "Security and Encryption for H-Series (H.323 and other H.245-based) Multimedia Terminals") sind Sicherheitsmechanismen für eine paketorientierte Netzwerkkommunikation definiert. Integrität und Authentizität der Registrierungs- und Signalisierungsnachrichten werden dabei u.a. durch kryptografische Checksummen unter Einbeziehung eines gemeinsamen Geheimnisses sichergestellt. Tritt bei der Überprüfung einer kryptografischen Checksumme ein Fehler auf, so werden die Nachrichten, die auch Adressinformation enthalten kann, verworfen.

Im sog. "Baseline-Profil" nach H.235 Annex D authentifizieren sich eine Kommunikationseinheit und ein Verbindungssteuerungs-Rechner, der auch als Gatekeeper bezeichnet wird, mittels eines Passwortes, welches vorher registriert wurde. Im sog. "hybriden Profil" gemäß H.235 Annex F verwenden die Kommunikationseinheit und der Verbindungssteuerungs-Rechner bei der Anmeldung bzw. Registrierung digitale Signaturen und Zertifikate. Zum Integritätsschutz der nach erfolgreicher Anmeldung folgenden weiteren Nachrichten, wird während der Anmeldeprozedur ein gemeinsames Geheimnis mit einem sog. Diffie-Hellman-Verfahren dynamisch ausgehandelt.

Zur Überprüfung der Authentizität einer erhaltenen Nachricht sowie zur Autorisierungsprüfung, muss der Verbindungssteuerungs-Rechner auf eine Datenbank zugreifen, in der die Nutzerprofile mit den voradministrierten Passwörtern für H.235 Annex D bzw. mit den Zertifikaten bei H.235 Annex F gespeichert sind. Diese Datenbank befindet sich üblicherweise im selben IP-Netzwerk wie der Verbindungssteuerungs-Rechner. Kommunikationseinheiten in anderen IP-Netzwerken können sich auch anmelden, wenn ihre Nachrichten über einen Netzwerkverbindungs-Rechner an den Verbindungssteuerungs-Rechner weitergeleitet werden.

Für die Weiterleitung von Nachrichten gibt es eine Reihe von bekannten Methoden. Die Nachricht wird unverändert weitergeleitet. Diese Möglichkeit scheidet aus, wenn an den Grenzen des Netzwerks eine Umsetzung von IP-Adressen (Network Address Translation NAT) durchgeführt werden muss.

In einer nächsten Methode wird nur ein Teil der Nachricht, der nicht verändert werden muss, geschützt (H.235 Annex D "Authentication only"). Diese Methode erfordert keinen zusätzlichen Administrationsaufwand, ermöglicht aber sog. "manin-the-middle-Attaken".

Bei einer weiteren Methode wird die kryptografische Checksumme bereits am Netzwerkverbindungs-Rechner überprüft und anschließend neu berechnet. Dazu benötigt der Netzwerkverbindungs-Rechner Zugriff auf die Datenbank des Verbindungssteuerungs-Rechners oder auf eine entsprechende Kopie. Diese Methode erfordert sowohl einen erhöhten Administrationsaufwand als auch Protokolle zum Transport von Datenbank-Informationen über Netzwerkgrenzen hinweg.

In einer anderen Methode wird bei Kommunikationseinheiten nach H.235 Annex F die Authentifizierung und die Autorisierung aufgeteilt. Die Kommunikationseinheit wird von dem Netzwerkverbindungs-Rechner, der bereits eine Sicherheitsbeziehung mit dem Verbindungssteuerungs-Rechner besitzt, aufgrund einer digitalen Signatur in der Anmeldenachricht authentifiziert. Danach reicht der Netzwerkverbindungs-Rechner eine modifizierte Nachricht, ggf. über weitere Netzwerkverbindungs-Rechner, bis zum Verbindungssteuerungs-Rechner weiter. Da es sich hierbei um eine modifizierte Nachricht handelt, wird diese mit einer speziellen Kennzeichnung (Object Identifier OID) versehen. Am Verbindungssteuerungs-Rechner wird schließlich die Autorisierung des Clients durch Vergleich des mitgeschickten Zertifikats mit seiner Datenbank geprüft. Die Antwort des Verbindungssteuerungs-Rechners wird anschließend über die Kette der Netzwerkverbindungs-Rechner bis zum ersten Netzwerkverbindungs-Rechner zurückgereicht. Dieser erste Netzwerkverbindungs-Rechner beantwortet nun die Anfrage-Nachricht der Kommunikationseinheit mit einer Standard-konformen Antwort-Nachricht, deren Authentizität der Client überprüfen kann. Bei dieser Methode werden außerdem im Falle einer erfolgreichen Anmeldung sog. Diffie-Hellman-Parameter zwischen der Kommunikationseinheit und dem ersten Netzwerkverbindungs-Rechner ausgetauscht. Hieraus wird ein gemeinsames Geheimnis berechnet, so dass im Folgenden eine sichere Verbindung zwischen der Kommunikationseinheit und dem Netzwerkverbindungs-Rechner, bzw. somit auch zum Verbindungssteuerungs-Rechner besteht. Diese Methode ist aus der deutschen Patentanmeldung DE 10 2004 004 048.6 mit einer Veröffentlichungsnummer 10 2004 004 048 bekannt.

In einer Methode können Kommunikationseinheiten mit Hilfe einer sog. WLAN-Technology (WLAN - Wireless Local Area Network) eine Anmeldung an ein Kommunikationssystem durchführen. Hierbei wird eine Zugangsprüfung entweder durch einen Zugangs-Rechner (Access Point) oder durch den Zugang-Rechner und einem Zugangsverwaltungs-Rechner (Server) durchgeführt. Jedoch muss die Kommunikationseinheit zur Registrierung weiterhin einem dem Zugangs-Rechner bzw. dem Zugangsverwaltungs-Rechner nachfolgenden Verbindungssteuerungs-Rechner bekannt sein, d.h. ein Nutzerprofil der Kommunikationseinheit muss im Verbindungssteuerungs-Rechner verwaltet werden. Diese Methode ist bspw. aus Kapitel 10 des Benutzerhandbuchs des Cisco Aironet 1200 bekannt, siehe http://www.cisco.com/application/pdf/en/us/guest/products/ps4 30/c1679/ccmigration 09186a0080147d84.pdf.

Diese bekannten Methoden setzen voraus, dass jede Kommunikationseinheit in der Datenbank des Verbindungssteuerungs-Rechners administriert wird. Hierbei ist nachteilig, dass zum einen ein erhöhter Datenverkehr zwischen Netzwerkverbindungs-Rechner und Verbindungssteuerungs-Rechner erzeugt wird, und zum anderen wird durch diesen Nachrichtenverkehr, der unter Umständen über mehrere Netzwerkverbindungs-Rechner geleitet werden muss, eine erhöhte Verzögerung bei der Anmeldung einer Kommunikationseinheit in einem Kommunikationssystem erzeugt.

Ferner können in den genannten Methoden lediglich Kommunikationseinheiten an den Netzwerkverbindungs-Rechner und den Verbindungssteuerungs-Rechner angemeldet werden, die über die nötigen Sicherheitsmechanismen, wie z.B. digitale Signaturen und Zertifikate und/oder Passwörter, verfügen. Der Einsatz von Kommunikationseinheiten ohne Sicherheitsmechanismen ist hierbei nicht möglich, da diese die Sicherheit des gesamten Kommunikationssystems gefährden würden.

Ein Dokument WO01/0511 beschäftigt gemäß seiner Zusammenfassung mit einem Proxy-Gateway für Sprachübermittlung mittels Internetprotokoll-Telefonie.

Eine Entgegenhaltung US-A-5 586 260 offenbart gemäß seiner Zusammenfassung eine Methode und eine dazugehörige Vorrichtung zum Authentifizieren von Clients an einen Server, falls der Client und der Server unterschiedliche Sicherheitsmechanismen verwenden.

Eine Entgegenhaltung WO01/19018A gibt gemäß seiner Zusammenfassung eine Anordnung zum Durchführen einer Authentifikation von End-usern und End-points in einem paketorientierten Netzwerk an.

Die Aufgabe der vorliegenden Erfindung besteht deshalb darin, ein Kommunikationssystem, ein Verfahren zum Anmelden in einem Kommunikationssystem und einen Netzwerkverbindungs-Rechner bereitzustellen, die eine hohe Sicherheit bei geringem Administrationsaufwand in einfacher und effizienter Weise gewährleisten.

Diese Aufgabe wird ausgehend von dem Kommunikationssystem gemäß dem Oberbegriff des Anspruchs 1 durch dessen kennzeichnende Merkmale sowie ausgehend von dem Verfahren zum Anmelden in einem Kommunikationssystem gemäß dem Oberbegriff des Anspruchs 11 durch dessen kennzeichnende Merkmale gelöst. Ferner wird diese Aufgabe durch den Netzwerkverbindungs-Rechner gemäß dem Oberbegriff des Anspruchs 18 durch dessen kennzeichnende Merkmale gelöst.

Bei dem Kommunikationssystem, das als Kommunikationselemente zumindest einen Verbindungssteuerungs-Rechner, mindestens einen mit dem Verbindungssteuerungs-Rechner gekoppelten Netzwerkverbindungs-Rechner und zumindest eine mit dem Netzwerkverbindungs-Rechner gekoppelte Kommunikationseinheit umfasst, wobei an den Netzwerkverbindungs-Rechner eine erste Datenbank und an den Verbindungssteuerungs-Rechner eine zweite Datenbank angekoppelt ist, wird das Kommunikationssystem derart eingerichtet, dass zum Anmelden der Kommunikationseinheit in dem Kommunikationssystem eine Anfrage-Nachricht von der Kommunikationseinheit an den Netzwerkverbindungs-Rechner übertragen wird, die Anfrage-Nachricht mit Hilfe eines Nutzerprofils der Kommunikationseinheit dahingehend geprüft wird, ob die Kommunikationseinheit über eine Anmeldeberechtigung verfügt, wobei das Nutzerprofil in der ersten Datenbank abgelegt ist, bei positiver Prüfung der Anfrage-Nachricht diese in Form einer modifizierten Anfrage-Nachricht von dem Netzwerkverbindungs-Rechner an den Verbindungssteuerungs-Rechner weitergeleitet wird, die modifizierte Anfrage-Nachricht durch den Verbindungssteuerungs-Rechner mit Hilfe eines Berechtigungsprofils des Netzwerkverbindungs-Rechners analysiert wird, wobei das Berechtigungsprofil in der zweiten Datenbank abgelegt ist, nach positiver Analyse der modifizierten Anfrage-Nachricht und nach erfolgreicher Registrierung der Kommunikationseinheit von dem Verbindungssteuerungs-Rechner eine Antwort-Nachricht an die Kommunikationseinheit übertragen wird.

Durch das erfindungsgemäße Kommunikationssystem wird die Prüfung der Anmeldeberechtigung einer Kommunikationseinheit, die eine Anmeldung in dem Kommunikationssystem aufbauen möchte, durch den Netzwerkverbindungs-Rechner vorgenommen. Dadurch wird eine Reduktion der Komplexität in dem Verbindungssteuerungs-Rechner erreicht. Des Weiteren wird die Administration des Verbindungssteuerungs-Rechners vereinfacht, da lediglich das Berechtigungsprofil des Netzwerkverbindungs-Rechners dem Verbindungssteuerungs-Rechner bekannt sein muss, nicht aber das Nutzerprofil des an den Netzwerkverbindungs-Rechner angeschlossenen Kommunikationseinheiten.

Ferner wird eine Anzahl an Nachrichten, die zum Aufbau der Kommunikationsbeziehung benötigt werden, reduziert, da bspw. bei negativer Prüfung der Anmeldeberechtigung keine Antwort-Nachrichten zwischen dem Verbindungssteuerungs-Rechner und dem Netzwerkverbindungs-Rechner ausgetauscht werden müssen.

Besteht vorzugsweise eine Weiterleitung der modifizierten Anfrage-Nachricht nur nach vorheriger positiver Prüfung einer Authentizität und einer Autorisierung der Anfrage-Nachricht durch den Netzwerkverbindungs-Rechner, so können Kommunikationseinheiten sich am Kommunikationssystem anmelden, die Sicherheitsmechanismen unterstützen, wie bspw. die Authentifizierung.

Besteht in einer anderen vorzugsweisen Variante eine Weiterleitung der modifizierten Anfrage-Nachricht nur nach vorheriger positiver Prüfung einer Zugehörigkeit der Kommunikationseinheit zu einem ersten Netzwerk, wobei das erste Netzwerk zumindest die Kommunikationseinheit und den Netzwerkverbindungs-Rechner umfasst und wobei das erste Netzwerk gegenüber unbefugtem Zugang von außen sicher ist. So können auch Kommunikationseinheiten eine Anmeldung mit dem Kommunikationssystem aufbauen, die über keine Sicherheitsmechanismen verfügen.

In einer zusätzlichen Ausführungsform weist der Netzwerkverbindungs-Rechner einen Zugangsschutz auf, so dass ein ungewünschter Zugriff einer Kommunikationseinheit, die sich nicht im sicheren Netzwerk des Netzwerkverbindungs-Rechners befindet, unterbunden werden kann.

In einer vorteilhaften Variante sind mindestens zwei gekoppelte Kommunikationselemente durch eine sichere Verbindung miteinander verbunden, so dass ein sicherer Nachrichtenaustausch zwischen diesen gekoppelten Kommunikationselementen in einfacher Weise und mit geringem zeitlichem Aufwand durchgeführt werden kann.

Ist in einer weiteren vorteilhaften Variante mindestens zwischen dem Verbindungssteuerungs-Rechner und dem Netzwerkverbindungs-Rechner die sichere Verbindung vorhanden, so kann zumindest zwischen dem Verbindungssteuerungs-Rechner und dem Netzwerkverbindungs-Rechner ein sicherer Nachrichtenaustausch in einfacher Weise und mit geringem zeitlichem Aufwand durchgeführt werden.

Vorzugsweise sind die Kommunikationseinheit und der Verbindungssteuerungs-Rechner unterschiedlichen Netzwerken zugeordnet, so dass das erfindungsgemäße Kommunikationssystem auch in weit entfernten Netzwerken realisierbar ist. Zudem wird dadurch auch die Realisierung des erfindungsgemäßen Kommunikationssystems in Netzwerken ermöglicht, die nach unterschiedlichen Standards implementiert sind.

In einer weiteren Variante stellt der Verbindungssteuerungs-Rechner einen Rechner oder einen weiteren Netzwerkverbindungs-Rechner dar, der mit einem Verbindungssteuerungs-Rechner gekoppelt ist. Dadurch wird es ermöglicht, dass das erfindungsgemäße Kommunikationssystem auch dann realisiert werden kann, wenn zwischen der Kommunikationseinheit und dem Verbindungssteuerungs-Rechner eine Vielzahl, bspw. fünf, Netzwerkverbindungs-Rechner angeordnet sind.

Vorzugsweise ist eine Vergebührung eines Nachrichtenverkehrs mindestens einer Kommunikationseinheit dem Netzwerkverbindungs-Rechner zugeordnet. Hiermit kann der Netzwerkverbindungs-Rechner für jede Kommunikationseinheit separat Vergebührungsinformationen sammeln und unter Umständen auch auswerten.

In einer anderen bevorzugten Variante ist eine Gesamtvergebührung eines Nachrichtenverkehrs aller Kommunikationseinheiten, die mit dem Netzwerkverbindungs-Rechner verbunden sind, dem Verbindungssteuerungs-Rechner zugeordnet. Hierdurch kann in einfacher Weise der vollständige Nachrichtenverkehr aller Kommunikationseinheiten, die mit dem Netzwerkverbindungs-Rechner verbunden sind, erfasst werden.

Ferner betrifft die Erfindung ein Verfahren zum Anmelden in einem Kommunikationssystem, das als Kommunikationselemente einen Verbindungssteuerungs-Rechner, einen mit dem Verbindungssteuerungs-Rechner gekoppelten Netzwerkverbindungs-Rechner und zumindest eine mit dem Netzwerkverbindungs-Rechner gekoppelte Kommunikationseinheit umfasst, wobei eine erste Datenbank an den Netzwerkverbindungs-Rechner und eine zweite Datenbank an den Verbindungssteuerungs-Rechner angekoppelt ist, bei dem eine Anfrage-Nachricht von der Kommunikationseinheit an den Netzwerkverbindungs-Rechner übertragen wird, die Anfrage-Nachricht mit Hilfe eines Nutzerprofils der Kommunikationseinheit dahingehend geprüft wird, ob die Kommunikationseinheit über eine Anmeldeberechtigung verfügt, wobei das Nutzerprofil auf der ersten Datenbank abgelegt ist, bei positiver Prüfung der Anfrage-Nachricht die Anfrage-Nachricht in Form einer modifizierten Anfrage-Nachricht von dem Netzwerkverbindungs-Rechner an den Verbindungsrechner weiter-geleitet wird, die modifizierte Anfrage-Nachricht durch den Verbindungssteuerungs-Rechner mit Hilfe eines Berechtigungsprofils des Netzwerkverbindungs-Rechners analysiert wird, wobei das Berechtigungsprofil in der zweiten Datenbank abgelegt ist, und nach einer positiven Analyse der modifizierten Anfrage-Nachricht und nach einer erfolgreichen Anmeldung der Kommunikationseinheit eine Antwort-Nachricht von dem Verbindungssteuerungs-Rechner an die Kommunikationseinheit übermittelt wird.

Durch das erfindungsgemäße Verfahren wird die Prüfung der Anmeldeberechtigung vollständig auf den Netzwerkverbindungs-Rechner übertragen. Dadurch wird sowohl die Komplexität als auch der Administrationsaufwand des Verbindungssteuerungs-Rechners reduziert. Ferner wird es dadurch ermöglicht die Administration der Kommunikationseinheiten in dem Netzwerkverbindungs-Rechner zu bündeln.

In einer bevorzugten Variante des erfindungsgemäßen Verfahrens wird die modifizierte Anfrage-Nachricht nur nach vorheriger positiver Prüfung der Anfrage-Nachricht der Kommunikationseinheit auf Authentizität und/oder Autorisierung durch den Netzwerkverbindungs-Rechner weitergeleitet, so dass auch in einem unsicheren Netzwerk mit Hilfe dieser Sicherheitsmechanismen eine Anmeldung von Kommunikationseinheiten ermöglicht wird.

In einer weiteren bevorzugten Variante wird die modifizierte Anfrage-Nachricht nur nach vorheriger positiver Prüfung einer Zugehörigkeit der Kommunikationseinheit zu einem ersten Netzwerk weitergeleitet, wobei das erste Netzwerk zumindest die Kommunikationseinheit und den Netzwerkverbindungs-Rechner umfasst und wobei das erste Netzwerk (NW1) gegenüber unbefugtem Zugang von außen sicher ist. Hiermit erlaubt das erfindungsgemäße Verfahren auch unsicheren Kommunikationseinheiten, d.h. Kommunikationseinheiten, die über keine Sicherheitsmechanismen verfügen, eine Anmeldung zu ermöglichen.

Vorzugsweise wird der Netzwerkverbindungs-Rechner durch einen Zugangsschutz erweitert, so dass dadurch unerlaubte Zugriffe einer Kommunikationseinheit auf das Kommunikationssystem sicher kontrolliert werden können.

Wird eine sichere Verbindung bei mindestens zwei gekoppelten Kommunikationselementen aufgebaut, so kann hiermit sowohl die Sicherheit bei der Übertragung zwischen diesen Kommunikationselementen erhöht als auch die Komplexität zur Verschlüsselung von Nachrichten reduziert werden.

Wird in einer bevorzugten Variante zumindest zwischen dem Verbindungssteuerungs-Rechner und dem Netzwerkverbindungs-Rechner die sichere Verbindung erstellt, so kann eine Zeitdauer zum Anmelden einer Kommunikationseinheit verringert werden.

Ferner zeichnet sich eine bevorzugte Ausführungsform dadurch aus, dass die modifizierte Anfrage-Nachricht nur weitergeleitet wird, wenn die sichere Verbindung zwischen dem Verbindungssteuerungs-Rechner und dem Netzwerkverbindungs-Rechner besteht. Hiermit wird gewährleistet, dass eine Anmeldenachricht in effizienter Weise zur Registrierung an den Verbindungssteuerungs-Rechner weitergeleitet wird.

Des Weiteren umfasst die Erfindung auch einen Netzwerkverbindungs-Rechner mit Mitteln zum Durchführen des erfindungsgemäßen Verfahrens, mit einer Empfangseinheit zum Entgegennehmen von Nachrichten, insbesondere Anfrage- und/oder Antwort-Nachrichten und/oder Profilantwort-Nachricht, mit einer Sendeeinheit zum Versenden von Nachrichten, insbesondere von modifizierten Anfrage- und/oder Antwort-Nachrichten und/oder Profilanfrage-Nachricht, und mit einer Verarbeitungseinheit zum Prüfen einer Anmeldeberechtigung einer Kommunikationseinheit, insbesondere einer Authentizität und/oder Autorisierung, aufgrund einer Anfrage-Nachricht dieser Kommunikationseinheit und zum Weiterleiten der modifizierten Anfrage-Nachricht nach positiver Prüfung der Anfrage-Nachricht an einen Verbindungssteuerungs-Rechner.

Durch den erfindungsgemäßen Netzwerkverbindungs-Rechner kann das erfindungsgemäße Verfahren und/oder das erfindungsgemäße Kommunikationssystem in vorteilhafter Weise realisiert werden.

Weitere Einzelheiten sowie Vorteile der Erfindung werden anhand der Figuren 1 bis 7 erläutert. Im Einzelnen zeigen:
- Figur 1: ein erfindungsgemäßes Kommunikationssystem mit einem Netzwerk gemäß einem ersten Ausführungsbeispiel;
- Figur 2: ein weiteres erfindungsgemäßes Kommunikationssystem mit zwei Netzwerken gemäß einem zweiten Ausführungsbeispiel;
- Figur 3: ein weiteres erfindungsgemäßes Kommunikationssystem, wobei der Netzwerkverbindungs-Rechner über einen Zugangsschutz verfügt und beide Netzwerke sicher trennt;
- Figur 4: Anmelden und Erstellen einer sicheren Verbindung am Beispiel des Netzwerkverbindungs-Rechners und des Verbindungssteuerungs-Rechners;
- Figur 5: Anmelden einer Kommunikationseinheit an dem Netzwerkverbindungs-Rechner und dem Verbindungssteuerungs-Rechner, wobei zwischen der Kommunikationseinheit und dem Netzwerkverbindungs-Rechner eine sichere Verbindung aufgebaut wird;
- Figur 6: Anmelden einer Kommunikationseinheit an dem Netzwerkverbindungs-Rechner und dem Verbindungssteuerungs-Rechner, wobei die Kommunikationseinheit über keine Sicherheitsmechanismen verfügt;
- Figur 7: Übertragen einer Datennachricht von dem Verbindungssteuerungs-Rechner über den Netzwerkverbindungs-Rechner zur Kommunikationseinheit, wobei diese Datennachricht durch mehrere sichere Verbindungen geschützt wird, und sowohl im Verbindungssteuerungs-Rechner eine Gesamtvergebührungsinformation als auch im Netzwerkverbindungs-Rechner eine Vergebührungsinformation erstellt wird;
- Figur 8: ein weiteres erfindungsgemäßes Kommunikationssystem mit einer Vielzahl von Kommunikationseinheiten, Verbindungssteuerungs-Rechner und Netzwerkverbindungs-Rechner.

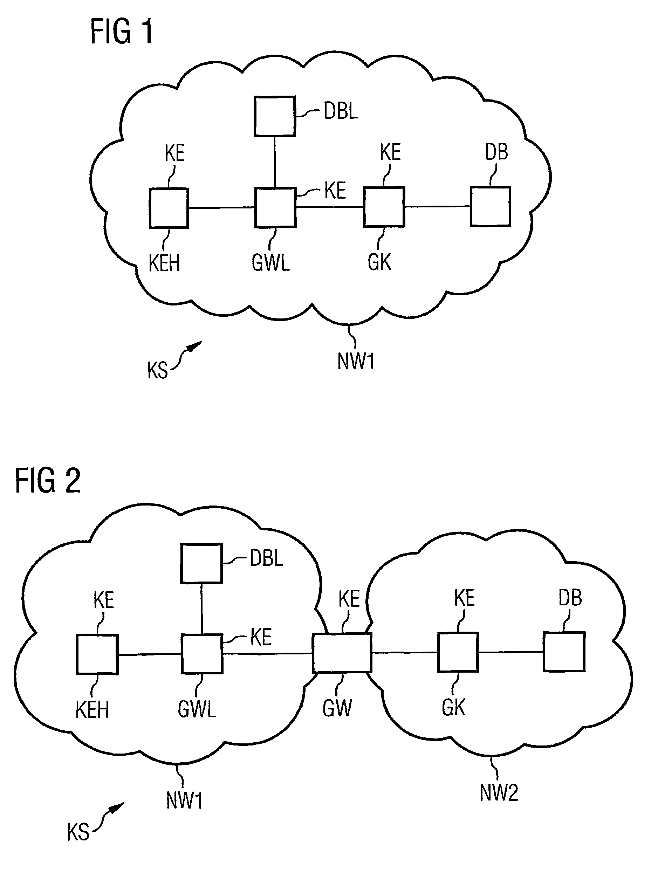

Elemente mit gleicher Funktion und gleicher Wirkungsweise sind in den Figuren 1 bis 8 mit denselben Bezugszeichen versehen.

Die nachfolgend beschriebenen Ausführungsbeispiele verschiedener Kommunikationssysteme werden bevorzugt für die IPbasierte (IP = Internet Protocol) Telefonie verwendet.

Figur 1 zeigt die einfachste Form eines erfindungsgemäßen Kommunikationssystems KS in einem ersten Ausführungsbeispiel. Als Kommunikationselemente KE weist das erfindungsgemäße Kommunikationssystem KS eine Kommunikationseinheit KEH, einen Netzwerkverbindungs-Rechner GWL, eine Verbindungssteuerungs-Rechner GK, eine erste Datenbank DBL und zweite Datenbank DB auf. Die erste Datenbank DBL, die nutzerspezifische Informationen der..Kommunikationseinheit KEH enthält, wie beispielsweise ein Nutzerprofil SEC der Kommunikationseinheit KEH, ist erfindungsgemäß ausschließlich mit dem Netzwerkverbindungs-Rechner GWL angekoppelt. Das Nutzerprofil SEC umfasst insbesondere Autorisierungsdaten, wie z.B. Zertifikate der Kommunikationseinheit KEH. Des Weiteren ist die zweite Datenbank DB erfindungsgemäß ausschließlich mit dem Verbindungssteuerungs-Rechner GK verbunden. Die zweite Datenbank DB enthält nutzerspezifische Informationen, wie bspw. ein Berechtigungsprofil WEC, über den Netzwerkverbindungs-Rechner GWL und nach erfolgreicher Registrierung der Kommunikationseinheit KEH spezifische Weiterleitungsinformationen (Rooting) der Kommunikationseinheit KEH, die bspw. dem Berechtigungsprofil WEC zugeordnet sind. So beinhaltet die zweite Datenbank DB insbesondere auch Autorisierungsdaten, wie z.B. das Zertifikat des Netzwerkverbindungs-Rechners GWL. Unter dem Begriff "gekoppelt" bzw. "angekoppelt" ist eine direkte Verbindung zu verstehen, d.h. dass diese Verbindung zwischen zwei Kommunikationselementen durch kein weiteres Kommunikationselement unterbrochen ist. Ferner kann eine solche Verbindung auch derart realisiert werden, dass zwei gekoppelte Kommunikationselemente physikalisch in einem Kommunikationselement implementiert werden. So kann bspw. die erste Datenbank DBL und der Netzwerkverbindungs-Rechner GWL in einer physikalischen Einheit, wie z.B. auf einem integrierten Chip oder in einem gemeinsamen Gerät, untergebracht sein. Analog gilt dies bspw. auch für die zweite Datenbank DB und den Verbindungssteuerungs-Rechner GK.

Im Ausführungsbeispiel nach Figur 1 sind die Kommunikationselemente KE, sowie die erste Datenbank DBL und die zweite Datenbank DB einem Netzwerk NW1 zugeordnet. Gemäß dem Ausführungsbeispiel nach Figur 2 können die Kommunikationselemente KE, die erste Datenbank DBL und die zweite Datenbank DB verschiedenen Netzwerken NW1, NW2 zugeordnet sein. Im Ausführungsbeispiel nach Figur 2 sind die Kommunikationseinheit KEH, der Netzwerkverbindungs-Rechner GWL und die erste Datenbank. DBL einem ersten Netzwerk NW1 zugeordnet. Ferner umfasst ein zweites Netzwerk NW2 den Verbindungssteuerungs-Rechner GK und die zweite Datenbank DB. Das erste und zweite Netzwerk NW1, NW2 sind über einen weiteren Netzwerkverbindungs-Rechner GW miteinander verbunden. Der weitere Netzwerkverbindungs-Rechner GW ist zum Teil dem ersten und zum Teil dem zweiten Netzwerk NW1 bzw. NW2 zugeordnet. Unter einem Netzwerk NW1, NW2 ist beispielsweise ein Kommunikationsnetz zu verstehen.

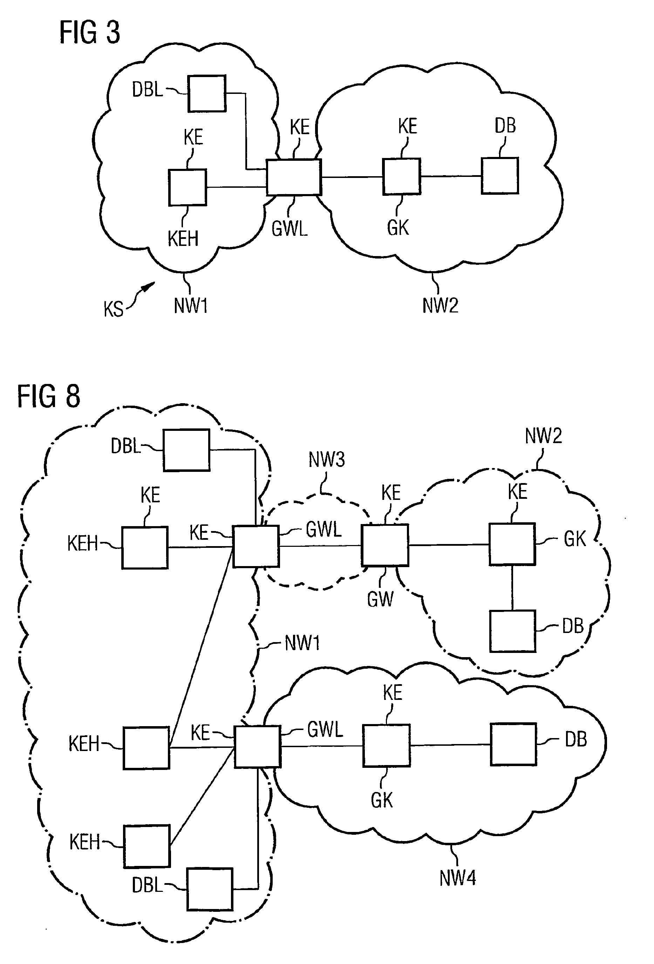

In einem dritten Ausführungsbeispiel des erfindungsgemäßen Kommunikationssystems KS nach Figur 3 sind die Kommunikationseinheit KEH und die erste Datenbank DBL dem ersten Netzwerk NW1 zugeordnet. Das zweite Netzwerk NW2 beinhaltet den Verbindungssteuerungs-Rechner GK und die zweit Datenbank DB. Das erste und zweite Netzwerk NW1, NW2 sind mit Hilfe des Netzwerkverbindungs-Rechners GWL miteinander verbunden, wobei der Netzwerkverbindungs-Rechner GWL teilweise dem ersten und zweiten Netzwerk NW1 bzw. NW2 zugeordnet ist.

Die jeweiligen Kommunikationselemente KE in dem ersten oder zweiten Netzwerk NW1, NW2 können auf Basis unterschiedlicher Protokolle arbeiten. So wird beispielsweise im ersten Netzwerk NW1 ein sog. SIP-Protokoll (SIP = Session Initiation Protocol), RFC 3261, und im zweiten Netzwerk NW2 ein sog. H.323 Protocol, ITU-T H.323 "Packet-based Multimedia Communication System" benutzt. Der Netzwerkverbindungs-Rechner GWL bzw. GW, der die Kommunikationselemente KE des ersten Netzwerkes NW1 mit den Kommunikationselementen KE des zweiten Netzwerkes NW2 verbindet, übernimmt beispielsweise die Protokollumsetzung und -übersetzung, insbesondere von Adressen, Formaten, Codes usw.. Der Netzwerkverbindungs-Rechner GWL bzw. GW, der auch als Gateway bezeichnet wird, arbeitet auf der kleinsten gemeinsamen Schicht gemäß dem OSI-Referenzmodell der zu verbindenden Netzwerke. Der Netzwerkverbindungs-Rechner kann als Netzknoten adressiert und von dem ersten und dem zweiten Netzwerk NW1, NW2 angesprochen werden.

Entgegen der zeichnerischen Darstellung der Figuren 1 bis 3 kann das erste Netzwerk NW1 eine Vielzahl von Kommunikationseinheiten KEH aufweisen, die miteinander und/oder mit mindestens einem Netzwerkverbindungs-Rechner GWL und dieser mit mindestens einem Verbindungssteuerungs-Rechner GK verbunden sind. Dies ist in Figur 8 zu sehen. Hierbei umfassen ein zweites und viertes Netzwerk NW2, NW4 jeweils einen Verbindungssteuerungs-Rechner GK mit einer jeweils angekoppelten zweiten Datenbank DB und jeweils einem Netzwerkverbindungs-Rechner GWL bzw. GW, und ein erstes Netzwerk NW1 mehrere Kommunikationseinheiten KEH und zwei Netzwerkverbindungs-Rechner GWL, die jeweils über eine erste angekoppelte Datenbank DBL verfügen. Ein drittes Netzwerk NW3 verfügt zwei Netzwerkverbindungs-Rechner GW bzw. GWL, wobei im dritten Netzwerk NW3 nachrichten lediglich vom ersten ins zweite bzw. vom zweiten ins erste Netzwerk übertragen werden.

Die Kommunikationseinheit KEH verwendet zum Anmelden einer Kommunikationsbeziehung in dem Kommunikationssystem KS insbesondere den Standard gemäß H.235 Annex D oder H.235 Annex F. Ferner kann sich gemäß der vorliegenden Erfindung eine Kommunikationseinheit KEH eine Kommunikationsbeziehung ohne Verwendung von Sicherheitsmechanismen, wie bspw. Authentifizierungs- oder Autorisierungsmechanismen, anmelden, wobei jedoch erfindungsgemäß vorausgesetzt wird, dass diese Kommunikationseinheit KEH zusammen mit dem Netzwerkverbindungs-Rechner GWL in einem ersten Netzwerk NW1 untergebracht ist, und die Kommunikation innerhalb dieses ersten Netzwerks NW1 sicher abgeschlossen ist, d.h. keine unerlaubten Zugriffe von außerhalb des Netzwerks möglich sind. Die Kommunikationseinheit KEH kann vorzugsweise in Form eines Mobilfunkgeräts nach GSM-Standard (GSM = Global System for Mobile Communications) oder UMTS-Standard (UMTS = Universal Mobile Telecommunication Standard) ausgebildet. Ferner kann die Kommunikationseinheit KEH in einer Computereinheit, die möglicherweise in einem tragbaren Gerät integriert ist, untergebracht sein. In einer weiteren Alternative kann die Kommunikationseinheit KEH in einem Festnetzgerät realisiert werden, das an ein drahtgebundenes Übertragungsmedium, wie z.B. ein Tip-basiertes Netzwerk oder ISDN (ISDN = Integrated Services Digital Network), angeschlossen wird.

Der Verbindungssteuerungs-Rechner GK, der auch als Gatekeeper bezeichnet wird, hat die Aufgabe, die Authentifizierung und Autorisierung des Netzwerkverbindungs-Rechner GWL, GW zu gewährleisten. Ferner wird die Kommunikationseinheit KEH an dem Verbindungssteuerungs-Rechner GK registriert, so dass beispielsweise bei eingehenden Telefonieanrufen für die Kommunikationseinheit KEH der Verbindungssteuerungs-Rechner GK diese über einen oder mehrere Netzwerkverbindungs-Rechner GWL, GW an die entsprechende Kommunikationseinheit KEH weiter vermitteln kann. Entgegen der zeichnerischen Darstellung nach den Figuren 1-3 können auch mehrere Verbindungssteuerungs-Rechner GK in einem Kommunikationssystem KS vorhanden sein.

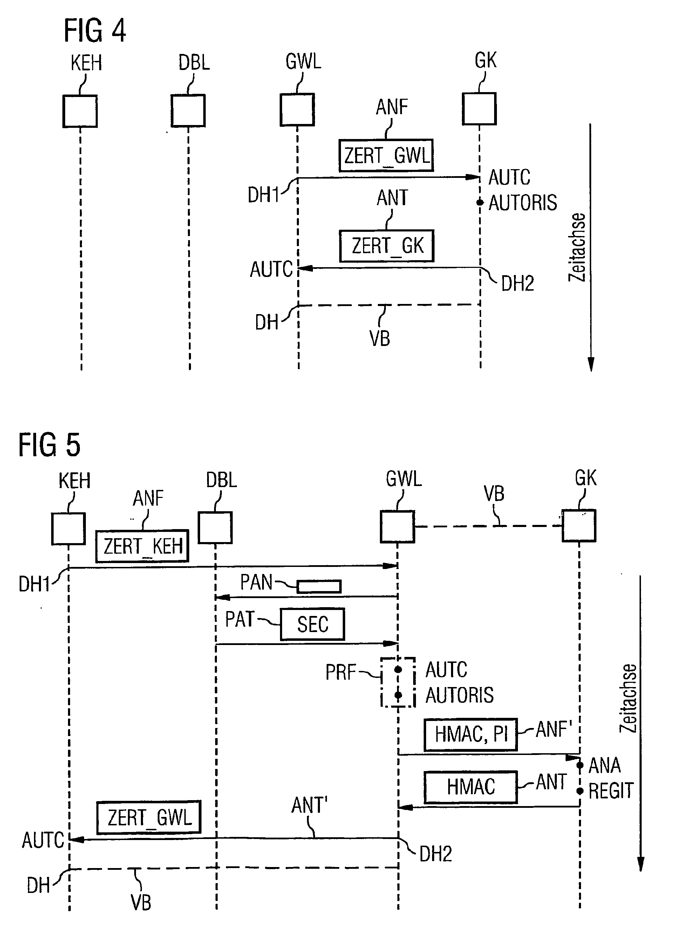

Mit Hilfe der Figuren 4 und 5 wird im folgenden das erfindungsgemäße Verfahren bei Verwendung von sicheren Kommunikationseinheiten KEH näher erläutert. Unter einer sicheren Kommunikationseinheit KEH sind Kommunikationseinheiten zu verstehen, die zum Austausch von Nachrichten, beispielsweise mit dem Netzwerkverbindungs-Rechner GWL eine sichere Verbindung VB aufbauen, d.h. derartige Kommunikationseinheiten verfügen über Sicherheitsmechanismen. Derartige sichere Kommunikationseinheiten verwenden beispielsweise den Standard H.235 Annex D oder Annex F. Zum Aufbau einer sicheren Verbindung VB zwischen zwei gekoppelten Kommunikationselementen KE benötigt jedes Kommunikationselement KE ein persönliches Zertifikat und den dazu passenden Schlüssel. Darüber hinaus benötigt jedes Kommunikationselement ein Root-Zertifikat, mit dem das persönliche Zertifikat jedes unmittelbar benachbarten Kommunikationselemtenes KE signiert wurde. Auf das erste Ausführungsbeispiel der Figur 1 bezogen bedeutet dies, dass der Netzwerkverbindungs-Rechner GWL ein persönliches Zertifikat ZERT_GWL und die Root-Zertifikate der Kommunikationseinheit und des Verbindungssteuerungs-Rechners aufweisen. Ein jeweiliges Root-Zertifikat dient zur Überprüfung der Echtheit des persönlichen Zertifikats.

Zum Aufbau der sicheren Verbindung VB sendet gemäß Figur 4 der Netzwerkverbindungs-Rechner GWL eine Anfrage-Nachricht ANF an den Verbindungssteuerungs-Rechner GK. Diese Anfrage-Nachricht ANF ist mittels des persönlichen Zertifikats ZERT_GWL des Netzwerkverbindungs-Rechner GWL signiert. In dieser Nachricht ist darüber hinaus ein sog. Diffie-Hellman-Halfset, das u.a. die öffentlichen Parameter für das Diffie-Hellman-Verfahren enthält, enthalten (gekennzeichnet mit dem Bezugszeichen DH1). Nach positiver Authentifizierung (AUTC) erfolgt die Autorisierung (AUTORIS) des Netzwerkverbindungs-Rechners GWL, in der der Verbindungssteuerungs-Rechner GK die mit ihm verbundene zweite Datenbank DB auf entsprechende nutzerspezifische Einträge untersucht. War die Autorisierung positiv, so überträgt der Verbindungssteuerungs-Rechner GK eine mit seinem persönlichen Zertifikat ZERT_GK signierte Antwort-Nachricht ANT an den Netzwerkverbindungs-Rechner GWL, wobei ebenfalls ein Diffie-Hellman-Halfset übertragen wird (gekennzeichnet mit dem Bezugszeichen DH2), um ein gemeinsames Geheimnis zwischen dem Netzwerkverbindungs-Rechner GWL und dem Verbindungssteuerungs-Rechner GK zu erzeugen. Diese Antwort-Nachricht ANT wird mittels des dem Netzwerkverbindungs-Rechner GWL vorliegenden Root-Zertifikats des Verbindungssteuerungs-Rechners GK auf Authentizität (AUTC) überprüft. War diese Überprüfung erfolgreich, so wird mit dem Diffie-Hellman-Verfahren ein Geheimnis errechnet (gekennzeichnet mit dem Bezugszeichen DH), das die Basis der sicheren Verbindung VB gründet.

Sollen weitere sichere Verbindungen VB zwischen zwei Kommunikationselementen KE aufgebaut werden, so wird in der beschriebenen Weise analog verfahren. Sofern in den nachfolgenden Figuren eine sichere Verbindung VB zwischen zwei benachbarten Kommunikationselementen KE besteht, wird dies durch eine gestrichelte Linie dargestellt.

Die Existenz der sicheren Verbindung VB ermöglicht nun die Übertragung einer Nachricht zwischen dem Netzwerkverbindungs-Rechner GWL und dem Verbindungssteuerungs-Rechner GK ohne die Verwendung der Zertifikate. Statt dessen kann auf das ausgehandelte Geheimnis zurückgegriffen werden, wodurch sich die Überprüfung einer Nachricht vereinfacht und wesentlich beschleunigt. Hierbei wird zur Authentifizierung und zum Integritätsschutz einer oder mehrerer Nachrichten beispielsweise auf das HMAC-Verfahren (kryptografische Hash-Funktion) zurückgegriffen.

Mit Hilfe von Figur 5 wird im Folgenden die Anmeldung der Kommunikationseinheit KEH in dem Kommunikationssystem KS gemäß der vorliegenden Erfindung näher erläutert. Hierbei wird in Figur 5 von einer sicheren Kommunikationseinheit KEH ausgegangen. In diesem Ausführungsbeispiel besteht zunächst lediglich eine sichere Verbindung VB zwischen dem Netzwerkverbindungs-Rechner GWL und dem Verbindungssteuerungs-Rechner GK. Zur Anmeldung versendet die Kommunikationseinheit KEH eine Anfrage-Nachricht ANF an den Netzwerkverbindungs-Rechner GWL. Da zusätzlich eine sichere Verbindung zwischen dem Netzwerkverbindungs-Rechner GWL und der Kommunikationseinheit KEH aufgebaut werden soll, ist diese Anfrage-Nachricht ANF mit dem sog. Diffie-Hellman-Halfset (Bezugszeichen DH1) versehen und mittels des persönlichen Zertifikats ZERT_KEH signiert. Nach Empfang dieser Anfrage-Nachricht ANF wird diese mit Hilfe eines Nutzerprofils SEC geprüft. Hierzu kann der Netzwerkverbindungs-Rechner GWL eine Profilanfrage-Nachricht PAN an die erste Datenbank DBL senden. Die erste Datenbank DBL antwortet darauf mit einer Profilantwort-Nachricht PAT, die das Nutzerprofil SEC der Kommunikationseinheit KEH umfasst. Daraufhin startet der Netzwerkverbindungs-Rechner GWL eine Prüfung (gekennzeichnet mit dem Bezugszeichen PRF) der Anfrage-Nachricht ANF. Diese Prüfung (PRF) umfasst beispielsweise eine Authentifizierung und/oder eine Autorisierung der Anfrage-Nachricht ANF. Bei negativer Prüfung (PRF) der Anfrage-Nachricht ANF wird keine Anmeldung der Kommunikationseinheit KEH am Kommunikationssystem KS durchgeführt. In diesem Fall kann die Kommunikationseinheit KEH mit Hilfe einer Antwort-Nachricht ANT über die negative Prüfung (PRF) informiert werden.

Bei positiver Prüfung (PRF) wird die Anfrage-Nachricht ANF in eine modifizierte Anfrage-Nachricht ANF' umgeformt. Diese modifizierte Anfrage-Nachricht ANF' umfasst beispielsweise ein Identifikationsmerkmal PI, welches eine eindeutige Kennzeichnung der Kommunikationseinheit KEH repräsentiert. Beispielsweise ist dieses eindeutige Identifikationsmerkmal PI eine IP-Adresse oder eine Telefonnummer. Diese modifizierte Anfrage-Nachricht ANF' wird mit Hilfe des HMAC-Verfahrens aufgrund der sicheren Verbindung VB integritätsgeschützt und an den Verbindungssteuerungs-Rechner GK übermittelt.

Nach Empfang dieser modifizierten Anfrage-Nachricht ANF analysiert der Verbindungssteuerungs-Rechner GK zunächst die Gültigkeit der modifizierten Anfrage-Nachricht ANF'. Diese Analyse, siehe Bezugszeichen (ANA), wird mit Hilfe des Berechtigungsprofils WEC des Netzwerkverbindungs-Rechners GWL durchgeführt. Dieses Berechtigungsprofil WEC umfasst bspw. einen Telefonnummerbereich, der von den am Netzwerkverbindungs-Rechner GWL angeschlossenen Kommunikationseinheiten KEH benutzt werden darf. Dieses Berechtigungsprofil WEC ist auf der zweiten Datenbank DB abgelegt. Ist diese Analyse positiv, so wird die Kommunikationseinheit KEH in der zweiten Datenbank DB des Verbindungssteuerungs-Rechners GK registriert (REGIT). Eine weitergehende Überprüfung, wie beispielsweise der Authentizität und/oder der Autorisierung der Kommunikationseinheit KEH findet erfindungsgemäß in dem Verbindungssteuerungs-Rechner GK nicht statt. Gemäß der vorliegenden. Erfindung geht der Verbindungssteuerungs-Rechner GK davon aus, dass die Autorisierung und Authentifizierung der Kommunikationseinheit KEH bereits durch den Netzwerkverbindungs-Rechner GWL vorgenommen wurde und positiv ist.

Nach erfolgreicher Registrierung (REGIT) wird zunächst der Netzwerkverbindungs-Rechner GWL über diese positive Registrierung mit Hilfe einer Antwort-Nachricht ANT informiert. Nach Empfang dieser Antwort-Nachricht ANT modifiziert der Netzwerkverbindungs-Rechner GWL diese Antwort-Nachricht ANT und leitet eine modifizierte Antwort-Nachricht ANT' an die Kommunikationseinheit KEH weiter. Diese modifizierte Antwort-Nachricht ANT' umfasst den sog. Diffie-Hellman-Halfset-Parameter (DH2), wobei diese modifizierte Antwort-Nachricht ANT' mit Hilfe des persönlichen Zertifikats ZERT_GWL des Netzwerkverbindungs-Rechners GWL signiert ist. Nach erfolgreicher Authentifizierung (AUTC) der modifizierten Antwort-Nachricht ANT' wird mit dem Diffie-Hellman-Verfahren ein Geheimnis errechnet (Bezugszeichen DH), das die Basis der sicheren Verbindung VB zwischen der Kommunikationseinheit KEH und dem Netzwerkverbindungs-Rechner GWL begründet.

Die Antwort-Nachricht ANT kann auch ein eindeutiges Identifikationsmerkmal, wie z.B. eine Telefonnummer oder eine Teilnehmer-Kennzahl für die Kommunikationseinheit KEH umfassen. Eine Alternative dazu besteht darin, dass mittels der modifizierten Anfrage-Nachricht ANF' eine Portnummer für die Antwort-Nachricht ANT übermittelt wird, wie z.B. Portnummer = "25110". Wird daraufhin die Antwort-Nachricht ANT mit dieser Portnummer übermittelt, so weiß der Netzwerkverbindungs-Rechner GWL, dass dies die Antwort-Nachricht ANT für eine ganz bestimmte Kommunikationseinheit KEH ist.

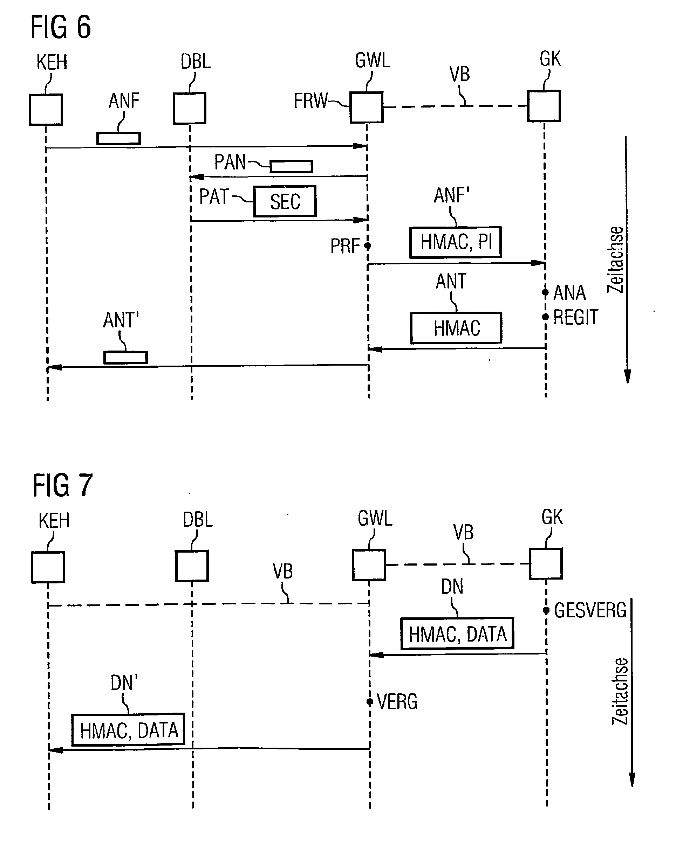

Figur 6 zeigt ein weiteres Ausführungsbeispiel zum Anmelden der Kommunikationseinheit KEH, wobei die Kommunikationseinheit KEH eine unsichere Kommunikationseinheit darstellt. Zunächst sendet die Kommunikationseinheit KEH eine Anfrage-Nachricht ANF an den Netzwerkverbindungs-Rechner GWL. Dieser prüft zunächst, ob eine Zugehörigkeit der Kommunikationseinheit KEH zu seinem ersten Netzwerk NW1 besteht. Hierzu frägt der Netzwerkverbindungs-Rechner GWL beispielsweise mittels einer Profilanfrage-Nachricht PAN bei der ersten Datenbank DBL das Nutzerprofil SEC der Kommunikationseinheit KEH ab. Die erste Datenbank DBL überträgt darauf eine Profilantwort-Nachricht PAT an den Netzwerkverbindungs-Rechner GWL, wobei diese Profilantwort-Nachricht PAT das Nutzerprofil SEC der Kommunikationseinheit KEH umfassen kann. Dann führt der Netzwerkverbindungs-Rechner GWL die Prüfung (PRF) durch. Die Prüfung ergibt beispielsweise, dass die Kommunikationseinheit KEH nicht Teil des Netzwerks NW1 ist. In diesem Fall ist die Prüfung (PRF) negativ, so dass das Anmelden der Kommunikationseinheit KEH abgebrochen wird. Hierzu sendet beispielsweise der Netzwerkverbindungs-Rechner GWL eine Antwort-Nachricht ANT an die Kommunikationseinheit KEH, um diese über das negative Prüfungsergebnis zu informieren. Verläuft die Prüfung (PRF) positiv, so wird die Anfrage-Nachricht ANF in Form einer modifizierten Anfrage-Nachricht ANF' an den Verbindungssteuerungs-Rechner GK weitergeleitet. Diese modifizierte Anfrage-Nachricht ANF' kann mit Hilfe des HMAC-Verfahrens geschützt sein und umfasst zumindest die Nutzungsidentifikation PI, die eine eindeutige Identifikation der Kommunikationseinheit KEH zulässt. Nach positiver Analyse (ANA) der modifizierten Anfrage-Nachricht ANF' und erfolgreicher Registrierung (REGIT) der Kommunikationseinheit KEH durch den Verbindungssteuerungs-Rechner GK sendet dieser zunächst eine mit dem HMAC- Verfahren geschützte Antwort-Nachricht ANT an den Netzwerkverbindungs-Rechner GWL. Dieser leitet diese Antwort-Nachricht ANT in Form einer ungeschützten modifizierten Antwort-Nachricht ANT' an die Kommunikationseinheit KEH weiter.

In einer Alternative des erfindungsgemäßen Verfahrens frägt der Netzwerkverbindungs-Rechner GWL in seiner ersten Datenbank DBL lediglich an, ob die Kommunikationseinheit KEH Teil seines Netzwerkes NW1 ist. Die erste Datenbank DBL übermittelt in diesem Fall lediglich den Status der Anfrage, wie z.B. dass die Kommunikationseinheit KEH Teil oder nicht Teil des Netzwerks NW1 ist. Somit ist es nicht zwingend erforderlich, das Nutzerprofil SEC von der ersten Datenbank DBL zum Netzwerkverbindungs-Rechner GWL zu übermitteln.

Nach dem erfindungsgemäßen Verfahren übernimmt der Netzwerkverbindungs-Rechner GWL die Überprüfung, ob die Kommunikationseinheit KEH zum Anmelden einer Kommunikationsbeziehung in dem Kommunikationssystem KS berechtigt ist. Zur Gewährleistung eines sicheren Kommunikationssystems KS muss entweder die Authentizität und Autorisierung der Anfrage-Nachricht ANF durch den Netzwerkverbindungs-Rechner GWL überprüft werden, oder die Kommunikationseinheit KEH befindet sich mit dem Netzwerkverbindungs-Rechner GWL in einem gemeinsamen ersten Netzwerk NW1, welches gegen unbefugten Zugriff von außen, d.h. von außerhalb des Netzwerks NW1, sicher ist. Hierzu ist es besonders vorteilhaft, wenn der Netzwerkverbindungs-Rechner GWL über einen Zugangsschutz FWR verfügt, so dass keine ungewollten Zugriffe von außerhalb des Netzwerkes NW1 in das Netzwerk NW1 erfolgen können. Ein solcher Zugangsschutz FWR ist auch als Firewall bekannt. Im Ausführungsbeispiel nach Figur 3 muss der Netzwerkverbindungs-Rechner GWL einen derartigen Zugangsschutz FRW aufweisen, falls für unsichere Kommunikationseinheiten KEH in dem Kommunikationssystem KS eine sichere Anmeldung realisiert werden soll. In Figur 2 hingegen muss zur Anbindung von unsicheren Kommunikationseinheiten KEH der Netzwerkverbindungs-Rechner GWL keinen Zugangsschutz FRW aufweisen, so lange der Netzwerkverbindungs-Rechner GW einen derartigen Zugangsschutz FRW umfasst.

In Figur 7 ist eine Erweiterung des erfindungsgemäßen Verfahrens zu sehen, mit dem im Folgenden eine Vergebührung näher erläutert wird. Für dieses Ausführungsbeispiel wird vorausgesetzt, dass sowohl zwischen der Kommunikationseinheit KEH und dem Netzwerkverbindungs-Rechner GWL als auch zwischen dem Netzwerkverbindungs-Rechner GWL und dem Verbindungssteuerungs-Rechner GK jeweils eine sichere Verbindung VB besteht. Ferner wurde die Kommunikationseinheit KEH bereits erfolgreich durch den Netzwerkverbindungs-Rechner GWL authentifiziert und autorisiert und erfolgreich durch den Verbindungssteuerungs-Rechner GK registriert. Aufgrund der Registrierung sind dem Verbindungssteuerungs-Rechner GK alle Kommunikationseinheiten KEH bekannt, die über den Netzwerkverbindungs-Rechner GWL derzeit erreichbar sind. Beispielsweise soll ein Datenpaket DATA an die Kommunikationseinheit KEH geliefert werden. Dazu übermittelt der Verbindungssteuerungs-Rechner GK eine Datennachricht DN mit dem Datenblock DATA an den Netzwerkverbindungs-Rechner GWL. Diese Nachricht ist mit Hilfe des HMAC-Verfahrens geschützt. Im Folgenden leitet der Netzwerkverbindungs-Rechner GWL die Datennachricht DN in Form einer modifizierten Datennachricht DN' weiter. Diese modifizierte Datennachricht DN' enthält den Datenblock DATA und ist mit Hilfe des HMAC-Verfahrens authentifiziert und integritätsgeschützt. Zum Zwecke der Vergebührung kann der Netzwerkverbindungs-Rechner GWL eine Vergebührung (VERG) für jede einzelne Kommunikationseinheit KEH durchführen. Zusätzlich oder alternativ kann der Verbindungssteuerungs-Rechner GK eine Gesamtvergebührung (GESVERG) für mindestens eine an den Netzwerkverbindungs-Rechner GWL übermittelten oder vom Netzwerkverbindungs-Rechner GWL empfangenen Nachricht erstellen. Zu einem späteren Zeitpunkt kann sowohl der Netzwerkverbindungs-Rechner GWL als auch der Verbindungssteuerungs-Rechner GK die gesammelten Vergebührungsinformationen an eine Vergebührungsstelle zur Auswertung weiterleiten.

Durch das erfindungsgemäße Verfahren wird die Prüfung, ob eine Kommunikationseinheit zur Anmeldung in einem Kommunikationssystem berechtigt ist, lediglich dem Netzwerkverbindungs-Rechner GWL auferlegt. Bei einer negativen Prüfung lehnt der Netzwerkverbindungs-Rechner GWL die Anfrage-Nachricht ab. Somit wird zum einen die Komplexität innerhalb des Verbindungssteuerungs-Rechners GK reduziert, da er diese Prüfung nicht durchführen muss. Zum anderen werden Nachrichten, die zur Prüfung der Anfrage-Nachricht von dem Netzwerkverbindungs-Rechner GWL zum Verbindungssteuerungs-Rechner GK verschickt werden müssten, reduziert. Hiermit wird Übertragungsbandbreite eingespart. Zusätzlich können durch die Verlagerung der Prüfung in den Netzwerkverbindungs-Rechner GWL auch unsichere Kommunikationseinheiten eine sichere Anmeldung innerhalb des Kommunikationssystems aufbauen. Des Weiteren wird die Administrierung der Kommunikationseinheiten KEH von dem Verbindungssteuerungs-Rechner GK in den Netzwerkverbindungs-Rechner GWL verlagert. Dadurch wird es ermöglicht, dass beispielsweise bei Firmennetzwerken, die mit Hilfe des Netzwerkverbindungs-Rechners GWL bzw. GW einen Anschluss an ein weiteres Netzwerk erlauben, die Administrierung der Kommunikationseinheiten KEH innerhalb dieses Firmennetzwerks in einfacher und effizienter Weise durchgeführt werden kann.

Zusätzlich ist innerhalb des Verbindungssteuerungs-Rechners GK lediglich eine Administrierung des Netzwerkverbindungs-Rechners GWL und nicht aller Kommunikationseinheiten KEH erforderlich, so dass hiermit die Komplexität des Verbindungssteuerungs-Rechner GK reduziert wird.

Ein weiterer Vorteil der vorliegenden Erfindung zeigt sich dadurch, dass zur Realisierung des erfindungsgemäßen Verfahrens eine Änderung der bestehenden Kommunikationsprotokolle innerhalb der Kommunikationseinheiten KEH nicht erforderlich ist. Zusätzlich wird durch das erfindungsgemäße Verfahren auch ermöglicht, dass unterschiedliche Protokolle, wie z.B. H.323 oder SIP eingesetzt werden können.

## Patentansprüche

1. Kommunikationssystem (KS), das als Kommunikationselemente (KE) zumindest einen Verbindungssteuerungs-Rechner (GK), mindestens einen mit dem Verbindungssteuerungs-Rechner (GK) direkt verbundenen Netzwerkverbindungs-Rechner (GWL) und zumindest eine mit dem Netzwerkverbindungs-Rechner (GWL) direkt verbundene Kommunikationseinheit (KEH) umfasst, wobei an den Netzwerkverbindungs-Rechner (GWL) eine erste Datenbank (DBL) und an den Verbindungssteuerungs-Rechner (GK) eine zweite Datenbank (DB) direkt verbunden ist, wobei das Kommunikationssystem (KS) derart eingerichtet ist, dass
a) zum Anmelden der Kommunikationseinheit (KEH) in dem Kommunikationssystem (KS) eine Anfrage-Nachricht (ANF) von der Kommunikationseinheit (KEH) an den Netzwerkverbindungs-Rechner (GWL) übertragen wird,
b) die Anfrage-Nachricht (ANF) mit Hilfe eines Nutzerprofils (SEC) der Kommunikationseinheit (KEH) dahingehend geprüft wird, ob die Kommunikationseinheit (KEH) über eine Anmeldeberechtigung verfügt, wobei das Nutzerprofil (SEC) in der ersten Datenbank (DBL) abgelegt ist,
c) bei positiver Prüfung die Anfrage-Nachricht (ANF) in Form einer modifizierten Anfrage-Nachricht (ANF') von dem Netzwerkverbindungs-Rechner (GWL) an den Verbindungssteuerungs-Rechner (GK) weitergeleitet wird,
d) die modifizierte Anfrage-Nachricht (ANF') durch den Verbindungssteuerungs-Rechner (GK) mit Hilfe eines Berechtigungsprofils (WEC) des Netzwerkverbindungs-Rechners (GWL) analysiert wird, wobei das Berechtigungsprofil (WEC) in der zweiten Datenbank (DB) abgelegt ist,
e) nach positiver Analyse der modifizierten Anfrage-Nachricht (ANF') und nach erfolgreicher Registrierung der Kommunikationseinheit (KEH) von dem Verbindungssteuerungs-Rechner (GK) eine Antwort-Nachricht (ANT) an die Kommunikationseinheit (KEH) übermittelt wird.

2. Kommunikationssystem (KS) nach Anspruch 1,
**dadurch gekennzeichnet,**
**dass** eine Weiterleitung der modifizierten Anfrage-Nachricht (ANF') nur nach vorheriger positiver Prüfung einer Authentizität und einer Autorisierung der Anfrage-Nachricht (ANF) durch den Netzwerkverbindungs-Rechner (GWL) besteht.

3. Kommunikationssystem (KS) nach Anspruch 1,
**dadurch gekennzeichnet,**
**dass** eine Weiterleitung der modifizierten Anfrage-Nachricht (ANF') nur nach vorheriger positiver Prüfung (PRF) einer Zugehörigkeit der Kommunikationseinheit (KEH) zu einem ersten Netzwerk (NW1) besteht, wobei das erste Netzwerk (NW1) zumindest die Kommunikationseinheit (KEH) und den Netzwerkverbindungs-Rechner (GWL) umfasst und wobei das erste Netzwerk (NW1) gegenüber unbefugtem Zugang von außen sicher ist.

4. Kommunikationssystem (KS) nach Anspruch 3,
**dadurch gekennzeichnet,**
**dass** der Netzwerkverbindungs-Rechner (GWL) einen Zugangsschutz (FRW) aufweist.

5. Kommunikationssystem (KS) nach einem der vorhergehenden Ansprüche,
**dadurch gekennzeichnet,**
**dass** mindestens zwei gekoppelte Kommunikationselemente (KE) durch eine sichere Verbindung (VB) miteinander verbunden sind.

6. Kommunikationssystem (KS) nach Anspruch 5,
**dadurch gekennzeichnet,**
**dass** mindestens zwischen dem Verbindungssteuerungs-Rechner (GK) und dem Netzwerkverbindungs-Rechner (GWL) die sichere Verbindung (VB) vorhanden ist.

7. Kommunikationssystem (KS) nach einem der vorhergehenden Ansprüche,
**dadurch gekennzeichnet,**
**dass** die Kommunikationseinheit (KEH) und der Verbindungssteuerungs-Rechner (GK) unterschiedlichen Netzwerken (NE1, NW2) zugeordnet sind.

8. Kommunikationssystem (KS) nach einem der vorhergehenden Ansprüche,
**dadurch gekennzeichnet,**
**dass** der Verbindungssteuerungs-Rechner (GK) einen Rechner oder einen weiteren Netzwerkverbindungs-Rechner (GW) darstellt, der mit einem Verbindungssteuerungs-Rechner (GK) gekoppelt ist.

9. Kommunikationssystem (KS) nach einem der vorhergehenden Ansprüche,
**dadurch gekennzeichnet,**
**dass** eine Vergebührung eines Nachrichtenverkehrs mindestens einer Kommunikationseinheit (KEH) dem Netzwerkverbindungs-Rechner (GWL) zugeordnet ist.

10. Kommunikationssystem (KS) nach einem der vorhergehenden Ansprüche,
**dadurch gekennzeichnet,**
**dass** eine Gesamtvergebührung eines Nachrichtenverkehrs aller Kommunikationseinheiten (KEH), die mit dem Netzwerkverbindungs-Rechner (GWL) verbunden sind, dem Verbindungssteuerungs-Rechner (GK) zugeordnet ist.

11. Verfahren zum Anmelden einer Kommunikationsbeziehung in einem Kommunikationssystem (KS), das als Kommunikationselemente (KE) einen Verbindungssteuerungs-Rechner (GK), einen mit dem Verbindungssteuerungs-Rechner (GK) direkt verbundenen Netzwerkverbindungs-Rechner (GWL) und zumindest eine mit dem Netzwerkverbindungs-Rechner (GWL) direkt verbundene Kommunikationseinheit (KEH) umfasst, wobei eine erste Datenbank (DBL) an den Netzwerkverbindungs-Rechner (GWL) und eine zweite Datenbank (DB) an den Verbindungssteuerungs-Rechner (GK) direkt verbunden ist, insbesondere nach einem der vorhergehenden Ansprüche, mit den Schritten:
a) Übertragen einer Anfrage-Nachricht (ANF) von der Kommunikationseinheit (KEH) an den Netzwerkverbindungs-Rechner (GWL);
b) Prüfung der Anfrage-Nachricht (ANF) mit Hilfe eines Nutzerprofils (SEC) der Kommunikationseinheit (KEH) dahingehend, ob die Kommunikationseinheit (KEH) über eine Anmeldeberechtigung verfügt, wobei das Nutzerprofil (SEC) auf der ersten Datenbank (DBL) abgelegt ist;
c) Bei positiver Prüfung (PRF) der Anfrage-Nachricht (ANF) wird die Anfrage-Nachricht (ANF) in Form einer modifizierten Anfrage-Nachricht (ANF') von dem Netzwerkverbindungs-Rechner (GWL) an den Verbindungsteuerungsrechner (GK) weitergeleitet ;
d) Analyse der modifizierten Anfrage-Nachricht (ANF') durch den Verbindungssteuerungs-Rechner (GK) mit Hilfe eines Berechtigungsprofils (WEC) des Netzwerkverbindungs-Rechners (GWL), wobei das Berechtigungsprofil (WEC) in der zweiten Datenbank (DB) abgelegt ist;
e) Nach positiver Analyse der modifizierten Anfrage-Nachricht (ANF') und erfolgreicher Anmeldung der Kommunikationseinheit (KEH) wird eine Antwort-Nachricht (ANT) von dem Verbindungssteuerungs-Rechner (GK) an die Kommunikationseinheit (KEH) übermittelt.

12. Verfahren nach Anspruch 11,
**dadurch gekennzeichnet,**
**dass** die modifizierte Anfrage-Nachricht (ANF') nur nach vorheriger positiver Prüfung (PRF) der Anfrage-Nachricht (ANF) der Kommunikationseinheit (KEH) auf Authentizität und Autorisierung durch den Netzwerkverbindungs-Rechner (GWL) weitergeleitet wird.

13. Verfahren nach Anspruch 11,
**dadurch gekennzeichnet,**
**dass** die modifizierte Anfrage-Nachricht (ANF') nur nach vorheriger positiver Prüfung (PRF) einer Zugehörigkeit der Kommunikationseinheit (KEH) zu einem ersten Netzwerk (NW1) weitergeleitet wird, wobei das erste Netzwerk (NW1) zumindest die Kommunikationseinheit (KEH) und den Netzwerkverbindungs-Rechner (GWL) umfasst und wobei das erste Netzwerk (NW1) gegenüber unbefugten Zugriffen von außen sicher ist.

14. Verfahren nach Anspruch 13,
**dadurch gekennzeichnet,**
**dass** der Netzwerkverbindungs-Rechner (GWL) durch einen Zugangsschutz (FRW) erweitert wird.

15. Verfahren nach dem Ansprüche 11 bis 14,
**dadurch gekennzeichnet,**
**dass** eine sichere Verbindung (VB) bei mindestens zwei gekoppelten Kommunikationselementen (KE) aufgebaut wird.

16. Verfahren nach Anspruch 15,
**dadurch gekennzeichnet,**
**dass** zumindest zwischen dem Verbindungssteuerungs-Rechner (GK) und dem Netzwerkverbindungs-Rechner (GWL) die sichere Verbindung (VB) erstellt wird.

17. Verfahren nach Anspruch 16,
**dadurch gekennzeichnet,**
**dass** die modifizierte Anfrage-Nachricht (ANF') nur weitergeleitet wird, wenn die sichere Verbindung (VB) zwischen dem Verbindungssteuerungs-Rechner (GK) und dem Netzwerkverbindungs-Rechner (GWL) besteht.

18. Netzwerkverbindungs-Rechner (GWL) mit Mitteln zum Durchführen des Verfahrens nach einem der Ansprüche 11 bis 17, mit einer Empfangseinheit (EE) zum Entgegennehmen von Anfrage- und/oder Antwort-Nachrichten und/oder einer Profilantwort-Nachricht (ANF, ANT, PAT),
mit einer Sendeeinheit (SE) zum Versenden von modifizierten Anfrage- und/oder Antwort-Nachrichten und/oder einer Profilanfrage-Nachricht (ANF', ANT', PAN),
mit einer Verarbeitungseinheit (VE) zum Prüfen (PRF) einer Anmeldeberechtigung einer Kommunikationseinheit (KEH), insbesondere einer Authentizität und/oder Autorisierung, aufgrund einer Anfrage-Nachricht (ANF) dieser Kommunikationseinheit (KEH) und zum Weiterleiten der modifizierten Anfrage-Nachricht (ANF') nach positiver Prüfung (PRF) der Anfrage-Nachricht (ANF) an einen Verbindungssteuerungs-Rechner (GK).

## Claims

1. Communication system (KS) comprises as communication elements (KE) at least one connection handling computer (GK), at least one connection handling computer (GK) directly connected to a network connection computer (GWL) and at least one with the network connection computer (GWL) directly connected communication unit (KEH), wherein the network connection computer (GWL) a first database (DBL) is directly connected to the connection handling computer (GK) a second database (DB), wherein the communication system (KS) is set up in such a way that
a) to log on the communication unit (KEH) in the communication system (KS) a request message (ANF) is transmitted from the communication unit (KEH) to the network connection computer (GWL),
b) the request message (ANF) with the help of a user profile (SEC) of the communication unit (KEH) is verified if the communication unit (KEH) has a log-on authorisation, whereby the user profile (SEC) is stored in the first database (DBL),
c) by positive verification the request message (ANF) is forwarded in the form of a modified request message (ANF') from the network connection computer (GWL) to the connection handling computer (GK),
d) the modified request message (ANF1) of the connection handling computer (GK) is analyzed with the help of an authentication profile (WEC) of the network connection computer (GWL), the authentication profile (WEC) is stored in the second database (DB),
e) after positive analysis of the modified request message (ANF') and after successful registration of the communication unit (KEH) from the connection handling computer (GK) a response message (ANT) is transmitted to the communication unit (KEH).

2. Communication system (KS) according to claim 1, is **characterized in that** forwarding the modified request message (ANF') is possible only after positive verification of authenticity and an authorization of the request message (ANF) through the network connection computer (GWL).

3. Communication system (KS) according to claim 1, is **characterized in that** forwarding the modified request message (ANF') only after prior positive verification (PRF) of a affiliation of the communication unit (KEH) to a first network (NW1), wherein the first network (NW1) comprises at least the communication unit (KEH) and the network connection computer (GWL), and wherein the first network (NW1) is secure against unauthorized external access.

4. Communication system (KS) according to claim 3, is **characterized in that** the network connection computer (GWL) comprises an access protection (FRW).

5. Communication system (KS) according to any one of the preceding claims, is **characterized in that** at least two coupled communication elements (KE) are interconnected through a secure connection (VB).

6. Communication system (KS) according to claim 5, is **characterized in that** at least between the connection handling computer (GK) and the network connection computer (GWL) a secure connection (VB) is present.

7. Communication system (KS) according to any one of the preceding claims, is **characterized in that** the communication unit (KEH) and the connection handling computer (GK) are assigned to different networks (NE1, NW2).

8. Communication system (KS) according to any one of the preceding claims, is **characterized in that** the connection handling computer (GK) represents a computer or another network connection computer (GM), which is coupled with a connection handling computer (GK).

9. Communication system (KS) according to any one of the preceding claims, is **characterized in that** billing of message traffic of at least one communication unit (KEH) is assigned to the network connection computer (GWL).

10. Communication system (KS) according to any one of the preceding claims is **characterized in that** total billing of message traffic for all communication units (KEH) connected to the network connection computer (GWL), is assigned to the connection handling computer (GK).

11. Method for registering a communication link in a communication system (KS), that comprises as communication elements (KE) a connection handling computer (GK), one with a connection handling computer (GK) directly connected to a network connecting computer (GWL) and at least-one with the network connection computer (GWL) directly connected communication unit (KEH), wherein a first database (DBL) to the network connection computer (GWL) and a second database (DB) to the connection handling computer (GK) are directly connected, in particular according to one of the preceding claims, with the steps
a) transmitting a request message (ANF) from the communication unit (KEH) to the network connection computer (GWL);
b) verification of the request message (ANF) using a user profile (SEC) of the communication unit (KEH) as to whether the communication unit (KEH) has a log-on authorisation, wherein the user profile (SEC) is stored in the first database (DBL);
c) with a positive verification (PRF) of the request message (ANF), the request message (ANF) will be forwarded in the form of a modified request message (ANF1) from the network connection computer (GWL) to the connection control computer (GK);
d) analysis of the modified request message (ANF') by the connection control computer (GC) using authentication profiles (WEC) of the network connection computer (GWL), wherein the authentication profile (WEC) is being filed in the second database (DB);
e) after positive analysis of the modified request message (ANF1) and successful log on of the communication unit (KEH) a response message (ANT) is transmitted from the connection handling computer (GK) to the communication unit (KEH).

12. Method of claim 11, is **characterized in that** the modified request message (ANF') is forwarded only after a positive verification (PRF) of the request message (ANF) of the communication unit (KEH) for authenticity and authorization by the network connection computer (GWL).

13. Method of claim 11, is **characterized in that** the modified request message (ANF') is forwarded only after a positive verification (PRF) of an affiliation of the communication unit (KEH) to a first network (NW1), wherein the first network (NW1) comprises at least the communication unit (KEH) and the network connection computer (GWL), and wherein the first network (NW1) is secure against unauthorized external access.

14. Method of claim 13, is **characterized in that** the network connection computer (GWL) is expended by an access protection (FRW).

15. Method according to any one of claims 11 to 14, is **characterized in that** a secure connection (VB) is established with at least two coupled communication elements (KE).

16. Method of claim 15, is **characterized in that** the secure connection (VB) is created at least between the a connection handling computer (GK) and the network connection computer (GWL).

17. Method of claim 16, is **characterized in that** the modified request message (ANF') is forwarded only when the secure connection (VB) exists between the connection handling computer (GK) and the network connection computer (GWL).

18. Network connection computer (GWL) with means for carrying out the method according to any one of claims 11 to 17, with a receiving unit (EE) for accepting request and/or response messages and/or a profile response message (ANF, ANT, PAT), with a transmitter unit (SE) for sending modified request and/or response messages and/or a profile request message (ANF', ANT1, PAN), with a processing unit (PU) for verification (PRF) of a log-on authorisation of a communication unit (KEH), in particular an authenticity and/or authorization, due to a request message (ANF) of this communication unit (KEH) and for forwarding the modified request message (ANF') after a positive verification (PRF) of the request message (ANF) to a connection handling computer (GK).

## Revendications

1. Système de communication (KS), qui comporte en tant qu'éléments de communication (KE) au moins un ordinateur de commande de connexion (GK), au moins un ordinateur de connexion réseau (GWL) directement relié à l'ordinateur de commande de connexion (GK) et au moins une unité de communication (KEH) directement reliée à l'ordinateur de connexion réseau (GWL), sachant qu'une première banque de données (DBL) est directement reliée au niveau de l'ordinateur de connexion réseau (GWL) et qu'une deuxième banque de données (DB) est directement reliée au niveau de l'ordinateur de commande de connexion (GK), sachant que le système de communication (KS) est mis en place de telle manière
a) qu'un message de demande (ANF) est transféré de l'unité de communication (KEH) à l'ordinateur de connexion réseau (GWL) pour ouvrir une session de l'unité de communication (KEH) dans le système de communication (KS),
b) que le message de demande (ANF) est contrôlé à l'aide d'un profil utilisateur (SEC) de l'unité de communication (KEH) pour voir si l'unité de communication (KEH) dispose d'une autorisation d'ouverture de session, sachant que le profil utilisateur (SEC) est enregistré dans la première banque de données (DBL),
c) qu'en cas de résultat de vérification positif, le message de demande (ANF) est transféré sous la forme d'un message de demande modifié (ANF') de l'ordinateur de connexion réseau (GWL) à l'ordinateur de commande de connexion (GK),
d) que le message de demande modifié (ANF') est analysé par l'ordinateur de commande de connexion (GK) à l'aide d'un profil d'autorisation (WEC) de l'ordinateur de connexion réseau (GWL), sachant que le profil d'autorisation (WEC) est enregistré dans la deuxième banque de données (DB),
e) qu'après l'analyse positive du message de demande modifié (ANF') et après l'enregistrement réussi de l'unité de communication (KEH), un message de réponse (ANT) est transmis de l'ordinateur de commande de connexion (GK) à l'unité de communication (KEH).

2. Système de communication (KS) selon la revendication 1,
**caractérisé en ce**
**qu'**un transfert du message de demande modifié (ANF') ne se fait qu'après le contrôle positif préalable d'une authenticité et après une autorisation accordée au message de demande (ANF) par l'ordinateur de connexion réseau (GWL).

3. Système de communication (KS) selon la revendication 1,
**caractérisé en ce**
**qu'**un transfert du message de demande modifié (ANF') ne se fait qu'après le contrôle positif préalable (PRF) d'une appartenance de l'unité de communication (KEH) à un premier réseau (NW1), sachant que le premier réseau (NW1) comporte au moins l'unité de communication (KEH) et l'ordinateur de connexion réseau (GWL) et sachant que le premier réseau (NW1) est sécurisé contre tout accès de l'extérieur non autorisé.

4. Système de communication (KS) selon la revendication 3,
**caractérisé en ce**
**que** l'ordinateur de connexion réseau (GWL) présente une protection d'accès (FRW).

5. Système de communication (KS) selon l'une quelconque des revendications précédentes,
**caractérisé en ce**
**qu'**au moins deux éléments de communication (KE) couplés sont reliés l'un à l'autre par une connexion sécurisée (VB).

6. Système de communication (KS) selon la revendication 5,
**caractérisé en ce**
**que** la connexion sécurisée (VB) est présente au moins entre l'ordinateur de commande de connexion (GK) et l'ordinateur de connexion de réseau (GWL).

7. Système de communication (KS) selon l'une quelconque des revendications précédentes,
**caractérisé en ce**
**que** l'unité de communication (KEH) et l'ordinateur de commande de connexion (GK) sont associés à des réseaux différents (NE1, NW2).

8. Système de communication (KS) selon l'une quelconque des revendications précédentes,
**caractérisé en ce**
**que** l'ordinateur de commande de connexion (GK) constitue un ordinateur ou un autre ordinateur de connexion réseau (GW), qui est couplé à un ordinateur de commande de connexion (GK).

9. Système de communication (KS) selon l'une quelconque des revendications précédentes,
**caractérisé en ce**
**qu'**une facturation liée à un trafic d'informations d'au moins une unité de communication (KEH) est associée à l'ordinateur de connexion réseau (GWL).

10. Système de communication (KS) selon l'une quelconque des revendications précédentes,
**caractérisé en ce**
**qu'**une facturation globale liée à un trafic d'informations de toutes les unités de communication (KEH), qui sont reliées à l'ordinateur de connexion réseau (GWL), est associée à l'ordinateur de commande de connexion (GK).

11. Procédé servant à demander l'établissement d'une communication dans un système de communication (KS), lequel comporte en tant qu'éléments de communication (KE) un ordinateur de commande de connexion (GK), un ordinateur de connexion réseau (GWL) directement relié à l'ordinateur de commande de connexion (GK) et au moins une unité de communication (KEH) directement reliée à l'ordinateur de connexion réseau (GWL), sachant qu'une première banque de données (DBL) est directement reliée au niveau de l'ordinateur de connexion réseau (GWL) et qu'une deuxième banque de données (DB) est directement reliée à l'ordinateur de commande de connexion (GK), en particulier selon l'une quelconque des revendications précédentes, comportant les étapes suivantes consistant à :
a) transférer un message de demande (ANF) de l'unité de communication (KEH) à l'ordinateur de connexion réseau (GWL) ;
b) contrôler le message de demande (ANF) à l'aide d'un profil utilisateur (SEC) de l'unité de communication (KEH) pour voir si l'unité de communication (KEH) dispose d'une autorisation de demande, sachant que le profil utilisateur (SEC) est enregistré dans la première banque de données (DBL) ;
c) transférer le message de demande (ANF) sous la forme d'un message de demande modifié (ANF') de l'ordinateur de connexion réseau (GWL) à l'ordinateur de commande de connexion (GK) en cas de résultat positif du contrôle (PRF) du message de demande (ANF) ;
d) faire analyser le message de demande modifié (ANF') par l'ordinateur de commande de connexion (GK) à l'aide d'un profil d'autorisation (WEC) de l'ordinateur de connexion réseau (GWL), sachant que le profil d'autorisation (WEC) est enregistré dans la deuxième banque de données (DB) ;
e) transmettre après l'analyse positive du message de demande modifié (ANF') et l'ouverture de session réussie de l'unité de communication (KEH), un message de réponse (ANT) de l'ordinateur de commande de connexion (GK) à l'unité de communication (KEH).

12. Procédé selon la revendication 11,
**caractérisé en ce**
**que** le message de demande modifié (ANF') n'est transféré qu'après le contrôle (PRF) positif préalable du message de demande (ANF) de l'unité de communication (KEH) quant à l'authenticité et l'autorisation par l'ordinateur de connexion réseau (GWL).

13. Procédé selon la revendication 11,
**caractérisé en ce**
**que** le message de demande modifié (ANF') n'est transféré qu'après le contrôle positif préalable (PRF) d'une appartenance de l'unité de communication (KEH) au premier réseau (NW1), sachant que le premier réseau (NW1) comporte au moins l'unité de communication (KEH) et l'ordinateur de connexion réseau (GWL) et sachant que le premier réseau (NW1) est sécurisé contre des accès non autorisés de l'extérieur.

14. Procédé selon la revendication 13,
**caractérisé en ce**
**que** l'ordinateur de connexion réseau (GWL) est étendu par une protection d'accès (FRW).

15. Procédé selon l'une quelconque des revendications 11 à 14,
**caractérisé en ce**
**qu'**une connexion sécurisée (VB) est établie pour au moins deux éléments de communication (KE) couplés.

16. Procédé selon la revendication 15,
**caractérisé en ce**
**que** la connexion sécurisée (VB) est établie au moins entre l'ordinateur de commande de connexion (GK) et l'ordinateur de connexion de réseau (GWL).

17. Procédé selon la revendication 16,
**caractérisé en ce**
**que** le message de demande modifié (ANF') n'est transféré que lorsque la connexion sécurisée (VB) existe entre l'ordinateur de commande de connexion (GK) et l'ordinateur de connexion de réseau (GWL).

18. Ordinateur de connexion de réseau (GWL) équipé de moyens servant à la mise en oeuvre du procédé selon l'une quelconque des revendications 11 à 17, équipé d'une unité de réception (EE) servant à prendre en charge des messages de demande et/ou de réponse et/ou un message de réponse de profil (ANF, ANT, PAT),
équipé d'une unité d'envoi (SE) servant à émettre des messages de demande et/ou de réponse et/ou un message de demande de profil modifiés (ANF', ANT', PAN),
équipé d'une unité de traitement (VE) servant à contrôler (PRF) une autorisation d'ouverture de session d'une unité de communication (KEH), en particulier une authenticité et/ou une autorisation, sur la base d'un message de demande (ANF) de ladite unité de communication (KEH) et servant à transférer à un ordinateur de commande de connexion (GK) le message de demande modifié (ANF') après un contrôle positif (PRF) du message de demande (ANF).
